# EUROPÄISCHE PATENTANMELDUNG

(11) **EP 4 371 964 A1**
(43) Veröffentlichungstag der Anmeldung: **22.05.2024**
(21) Anmeldenummer: 22208503.7
(22) Anmeldetag: 21.11.2022
(51) Int. Cl.: C04B 41/00, C04B 41/50, C04B 41/87, C04B 41/52, C04B 41/89, F27B 14/10

(54) **VERFAHREN ZUR BEHANDLUNG VON PORÖSEN SUBSTRATEN SOWIE BEHANDELTES SUBSTRAT UND DESSEN VERWENDUNG**

(71) Anmelder: Fraunhofer-Gesellschaft zur Förderung der angewandten Forschung e.V., 80686 München (DE)
(72) Erfinder: Sturm, Felix, 91058 Erlangen (DE); Reimann, Christian, 91058 Erlangen (DE)
(74) Vertreter: Pfenning, Meinig & Partner mbB

(57) **Zusammenfassung**

Die vorliegende Erfindung betrifft ein Verfahren zur Behandlung von porösen Substraten. Im Verfahren wird zunächst mindestens eine Oberfläche eines porösen kohlenstoffhaltigen Substrats mit mindestens einer Silicium-Beschichtung versehen, indem mindestens eine wässrige Suspension umfassend Silicium-Partikel, mindestens ein Bindemittel und Wasser auf die mindestens eine Oberfläche aufgebracht und danach einem Trocknungsprozess unterzogen wird. Die mindestens eine Silicium-Beschichtung wird dann mindestens einer Wärmebehandlung unterzogen, bei welcher die Silicium-Beschichtung zu einer Schmelze aufschmilzt, die in die Poren des porösen kohlenstoffhaltigen Substrats infiltriert, wobei in der Schmelze enthaltendes Silicium zumindest teilweise in Siliciumcarbid umgewandelt wird. Ferner betrifft die vorliegende Erfindung auch ein behandeltes Substrat sowie dessen Verwendung.

## Beschreibung

Die vorliegende Erfindung betrifft ein Verfahren zur Behandlung von porösen Substraten. Im Verfahren wird zunächst mindestens eine Oberfläche eines porösen kohlenstoffhaltigen Substrats mit mindestens einer Silicium-Beschichtung versehen, indem mindestens eine wässrige Suspension umfassend Silicium-Partikel, mindestens ein Bindemittel und Wasser auf die mindestens eine Oberfläche aufgebracht und danach einem Trocknungsprozess unterzogen wird. Die mindestens eine Silicium-Beschichtung wird dann mindestens einer Wärmebehandlung unterzogen, bei welcher die Silicium-Beschichtung zu einer Schmelze aufschmilzt, die in die Poren des porösen kohlenstoffhaltigen Substrats infiltriert, wobei in der Schmelze enthaltendes Silicium zumindest teilweise in Siliciumcarbid umgewandelt wird. Ferner betrifft die vorliegende Erfindung auch ein behandeltes Substrat sowie dessen Verwendung.

Kohlenstoff- bzw. Graphitmaterialien, darunter vor allem isostatisch gepresster Graphit (iso-Graphit) und kohlenstofffaserverstärkter Kohlenstoff (CFC), finden auf Grund ihrer guten thermomechanischen Stabilität und leichten Verarbeitbarkeit breite Anwendung in thermisch hochbeanspruchten Systemen. Dazu zählen unter anderem Komponenten für Hochtemperaturöfen, wie Heizer, Isolationskomponenten, Halterungen und Tiegel. Der langfristige Kontakt mit korrosiven Atmosphären bzw. Medien unter Einwirkung der hohen Temperaturen und mechanischer Beanspruchung kann allerdings zu einer verstärkte Degradation der Kohlenstoff- bzw. Graphitmaterialien führen. Dies reduziert die Lebensdauer der genannten Bauteile und führt zu erhöhten Kosten für Wartung und Instandhaltung.

Um die Einsatzzeit zu erhöhen, kann auf Kohlenstoff- bzw. Graphit-Siliciumcarbid-Verbundwerkstoffe (C/SiC-Verbundwerkstoffe) zurückgegriffen werden. Die Herstellung von C/SiC-Verbundwerkstoffen erfolgt üblicherweise über die Infiltration mit Siliziumschmelze von porösen Kohlenstoff- bzw. Graphitkörpern, z.B. Kohlstofffaser verstärkter Kohlenstoff (CFC), mit Siliziumschmelze (siehe z.B. Manish Patel et al., Bulletin of Materials Science, 2012, 63-73). Dabei wird das zu infiltrierende Bauteil in Kontakt mit flüssigem Silicium gebracht, welches vom Bauteil über Kapillarkräfte aufgenommen wird. Somit kommt es zu Reaktion zwischen dem Kohlenstoffanteil des Graphits sowie dem flüssigen Silizium und zur Bildung von Siliziumcarbid (SiC). Die Kinetik der SiC-Bildungsreaktion wird dabei vom Kontaktwinkel sowie der Ausbreitung der Silicium-Schmelze auf bzw. in dem Kohlenstoff- bzw. Graphitmaterial bestimmt (siehe O. Dezellus et al., Journal of Materials Science, 2005, 2307-2311). Dies kann durch äußere Einflüsse, wie etwa der Gasatmosphäre sowie dem Anlagendruck, während des Prozesses beeinflusst werden. Generell muss dabei beachtet werden, dass durch die Volumenzunahme bzw. Unterschiede in der Wärmeausdehnung während der SiC-Bildung Spannungen im Bauteil entstehen können, die in Graphitmaterialien mit geringer mechanischer Stabilität zu ausgeprägter Rissbildung führen (siehe R. Israel et al., J. Mater. Sci., 2010, 45, 2210-2217). Die Siliziummenge muss dabei zudem exakt dosiert werden, um eine möglichst vollständige Infiltration zu gewährleisten und gleichzeitig Silicium-Rückstände nach dem Abkühlen an der Oberfläche zu verhindern. Dies ist von grundlegender Wichtigkeit um eine aufwendige Nachbearbeitung bzw. Ausschuss zu vermeiden. Eine Vermeidung von Silicium-Rückständen ist jedoch grundsätzlich nur sehr schwer zu erreichen. Vor allem bei dichten Graphitmaterialien, wie z.B. im Falle von Iso-Graphit, ist die Infiltration durch Si-Schmelze zur Versiegelung der Oberfläche auf Grund der geringen Porosität und Aufnahmevermögen von flüssigem Silizium ungeeignet.

Alternativ kann außerdem eine dichte Beschichtung mit einer chemisch inerten und mechanisch stabilen, meist keramischen Komponente (z.B. SiC) auf den Kohlenstoff- bzw. Graphitmaterialien erfolgen. Dazu wird typischerweise mittels Gasphasenabscheidung (Chemical Vapour Deposition CVD bzw. Chemical Vapour Infiltration CVI) pyrolytischer Kohlenstoff oder SiC appliziert (siehe z.B. W. Zhou et al., Ceramics International 21730-21733). Dadurch können generell rissfreie und hochdichte Schichten erzeugt werden, die die Permeabilität der Kohlenstoff- bzw. Graphitbauteile für Fluide bzw. Gase nahezu komplett verhindern. Wird dabei ein Materialsystem gewählt (z.B. SiC), das zudem noch eine deutliche Steigerung der mechanischen bzw. der chemischen Beständigkeit mit sich bringt, kann so das Kohlenstoff- bzw. Graphitmaterial für deutlich weitere Anwendungsbereiche erschlossen werden.

Allerdings sind die genannten Verfahren mit hohen Kosten bzw. großem technischen Aufwand verbunden. Insbesondere sind in beiden Verfahren homogene Beschichtungen auf komplexen, großflächigen und dreidimensionalen Bauteilen nur sehr aufwendig applizierbar.

Ausgehend hiervon war es die Aufgabe der vorliegenden Erfindung ein einfaches und kostengünstiges Verfahren zur Behandlung von porösen Substraten anzugeben, mit welchem Substrate mit einer hohen Widerstandsfähigkeit und einer hohen Oberflächengüte erhalten werden können.

Diese Aufgabe wird bezüglich eines Verfahrens zur Behandlung von porösen Substraten mit den Merkmalen des Patentanspruchs 1 und bezüglich eines behandelten Substrats mit den Merkmalen des Patentanspruchs 10 gelöst. In Patentanspruch 15 werden Verwendungsmöglichkeiten des erfindungsgemäßen behandelten Substrats angegeben. Die abhängigen Patentansprüche stellen vorteilhafte Weiterbildungen dar.

Erfindungsgemäß wird somit ein Verfahren zur (Oberflächen-)Behandlung von porösen Substraten angegeben, bei welchem
a) mindestens eine Oberfläche eines porösen kohlenstoffhaltigen Substrats mit mindestens einer Silicium-Beschichtung versehen wird, indem mindestens eine wässrige Suspension umfassend Silicium-Partikel, mindestens ein Bindemittel und Wasser auf die mindestens eine Oberfläche aufgebracht und danach einem Trocknungsprozess unterzogen wird, und
b) die mindestens eine Silicium-Beschichtung mindestens einer Wärmebehandlung unterzogen wird, bei welcher die Silicium-Beschichtung zu einer Schmelze aufschmilzt, die in die Poren des porösen kohlenstoffhaltigen Substrats infiltriert, wobei in der Schmelze enthaltendes Silicium zumindest teilweise in Siliciumcarbid umgewandelt wird.

In Schritt a) des erfindungsgemäßen Verfahrens wird mindestens eine Oberfläche eines porösen kohlenstoffhaltigen Substrats mit mindestens einer Silicium-Beschichtung versehen. Hierfür wird mindestens eine wässrige Suspension auf die mindestens eine Oberfläche aufgebracht und danach die aufgebrachte mindestens eine wässrige Suspension einem Trocknungsprozess unterzogen. Die mindestens eine wässrige Suspension umfasst dabei Silicium-Partikel, mindestens ein Bindemittel und Wasser. Vorzugsweise kann die mindestens eine wässrige Suspension auch aus Silicium-Partikeln, mindestens einem Bindemittel und Wasser bestehen. Vorzugsweise handelt es sich bei den in der mindestens einen wässrigen Suspension enthaltenen Silicium-Partikeln um Silicium-Granulat oder Silicium-Pulver, besonders bevorzugt um Silicium-Granulat. Vorzugsweise wird die mindestens eine wässrige Suspension schichtförmig auf die mindestens eine Oberfläche aufgebracht.

Unter einem Bindemittel kann dabei allgemein ein Stoff verstanden werden, der an Phasengrenzen anderer Stoffe chemische Bindungen herstellt oder begünstigt oder Effekte wie Kohäsion, Adsorption und Adhäsion bzw. Reibung auslöst oder vergrößert.

Das mindestens eine Bindemittel führt zu einer Erhöhung der Viskosität und der Fließgrenze der wässrigen Suspension, so dass diese auf der mindestens einen Oberfläche haftet, nachdem sie darauf aufgebracht wurde.

Durch den Trocknungsprozess kann das in der aufgebrachten mindestens einen wässrigen Suspension enthaltene Wasser entfernt werden, so dass eine auf der mindestens einen Oberfläche angeordnete Silicium-Beschichtung resultiert, die die Silicium-Partikel und das mindestens eine Bindemittel umfasst, wobei die Silicium-Partikel durch das mindestens eine Bindemittel auf der mindestens einen Oberfläche weiter fixiert werden. Durch das mindestens eine Bindemittel kann somit verhindert werden, dass die Silicium-Partikel während oder nach dem Trocknungsprozess auf der mindestens einen Oberfläche verrutschen oder von der mindestens einen Oberfläche fallen (z.B. beim Transport des Substrats oder aufgrund eines zumindest teilweise senkrechten, schrägen oder nicht-planaren Verlaufs der mindestens einen Oberfläche). Mit anderen Worten kann durch das mindestens eine Bindemittel erreicht werden, dass die nach dem Trocknungsprozess vorhandene Silicium-Beschichtung abriebfest und haftfest ist. Die beim Auftragen der mindestens einen Suspension erzielte Verteilung der Silicium-Partikel auf der mindestens einen Oberfläche bleibt somit aufgrund des mindestens einen Bindemittels auch während oder nach dem Trocknungsprozess (bis zum Aufschmelzen in Schritt b) des erfindungsgemäßen Verfahrens) erhalten.

In Schritt b) des erfindungsgemäßen Verfahrens wird die in Schritt a) des erfindungsgemäßen Verfahrens erhaltene mindestens eine Silicium-Beschichtung dann mindestens einer Wärmebehandlung unterzogen. Bei dieser Wärmebehandlung schmilzt die Silicium-Beschichtung zu einer Schmelze auf, die in die Poren des porösen kohlenstoffhaltigen Substrats infiltriert. Der Bereich bzw. die Bereiche des Substrats, in den die Schmelze infiltriert, kann als Infiltrationszone bezeichnet werden. Zudem wird bei der Wärmebehandlung in der Schmelze enthaltendes Silicium zumindest teilweise in Siliciumcarbid umgewandelt. Vorzugweise wird bei der Wärmebehandlung in der Schmelze enthaltendes Silicium im Wesentlichen vollständig, vorzugsweise vollständig, in Siliciumcarbid umgewandelt.

Durch die (zumindest teilweise) Umwandlung des Siliciums in Siliciumcarbid, sind die Poren des schließlich erhaltenen Substrats in der Infiltrationszone zumindest teilweise mit Siliciumcarbid gefüllt. In der Folge kann (bei ausreichend hoher Infiltrationstiefe) ein nahezu vollständiger Verschluss, vorzugsweise ein im Wesentlichen vollständiger Verschluss, der Poren nahe der behandelten Oberfläche durch chemisch stabiles Siliciumcarbid und damit eine nahezu vollständige Versiegelung, vorzugsweise eine im Wesentlichen vollständige Versiegelung, der behandelten Oberfläche des Substrats erreicht werden, was durch eine nur geringe Permeabilität der mit dem erfindungsgemäßen Verfahren erhaltenen Substrate sowie eine nur geringe offene Porosität in der Infiltrationszone der mit dem erfindungsgemäßen Verfahren erhaltenen Substrate belegt werden kann. Der Grad der Versiegelung der behandelten Oberfläche ist dabei abhängig von der Infiltrationstiefe, d.h. von der Dicke der Infiltrationszone. Hierbei ist zu beachten, dass der Grad der Versiegelung, der bei einer bestimmten Infiltrationstiefe erreicht wird, vom Material und den Eigenschaften des Substrats abhängt. Somit kann - je nach Material - eine unterschiedliche Infiltrationstiefe notwendig sein, um einen bestimmten Versiegelungsgrad der Oberfläche zu erreichen. Die Dicke der Infiltrationszone (bzw. die Infiltrationstiefe) und damit der Grad der Versiegelung kann über verschiedene Parameter (wie z.B. die Menge pro Flächeneinheit der auf der mindestens einen Oberfläche aufgetragenen mindestens einen wässrigen Suspension, den Anteil an Silicium-Partikeln in der mindestens einen wässrigen Suspension, die Gasatmosphäre während der mindestens einen Wärmebehandlung, die Temperatur während der mindestens einen Wärmebehandlung, die Dauer während der mindestens einen Wärmebehandlung, und/oder den Prozessdruck während der mindestens einen Wärmebehandlung) eingestellt werden. Die Dicke der Infiltrationszone (bzw. die Infiltrationstiefe) kann beispielsweise mindestens 50 µm, bevorzugt mindestens 100 µm, besonders bevorzugt, mindestens 200 µm betragen. Der Grad der Versiegelung kann über die Permeabilität des Substrats sowie über die offene Porosität in der Infiltrationszone bestimmt werden. Je niedriger die Permeabilität des Substrats und je niedriger die offene Porosität in der Infiltrationszone, desto höher ist der Grad der Versiegelung.

Das erfindungsgemäße Verfahren zeichnet sich besonders dadurch aus, dass durch die Verwendung einer wässrigen Suspension umfassend Silicium-Partikel, mindestens ein Bindemittel und Wasser ein sehr definierter Silicium-Auftrag ermöglicht wird, durch welchen sowohl eine möglichst vollständige Versiegelung der behandelten Oberfläche erreicht werden kann als auch eine Bildung von Silicium-Rückständen auf der Oberfläche des Substrats zumindest weitgehend vermieden werden kann. Ein besonderer Vorteil des erfindungsgemäßen Verfahrens stellt dar, dass auch bei sehr dichten und damit schlecht infiltrierbaren Materialien bzw. Substraten eine möglichst vollständige Versiegelung der behandelten Oberfläche erreicht und eine Bildung von Silicium-Rückständen auf der Oberfläche des Substrats zumindest weitgehend vermieden werden kann.

Der sehr definierte Silicium-Auftrag wird im erfindungsgemäßen Verfahren dadurch erreicht, dass die Silicium-Partikel mithilfe einer wässrigen Suspension, die zusätzlich mindestens ein Bindemittel enthält, auf die mindestens eine Oberfläche des Substrats aufgebracht werden. Durch das Aufbringen der Silicium-Partikel mithilfe einer wässrigen Suspension kann eine sehr homogene Verteilung der Silicium-Partikel auf der mindestens einen Oberfläche des Substrats erreicht werden, wobei durch das mindestens eine Bindemittel die wässrige Suspension auf der mindestens einen Oberfläche haftet. Zudem wird durch das mindestens eine Bindemittel erreicht, dass die Silicium-Partikel nach der Entfernung des Wassers (durch den Trocknungsprozess) weiter auf der mindestens einen Oberfläche fixiert werden, sodass die sehr homogene Verteilung der Silicium-Partikel auch nach Entfernung des Wassers erhalten bleibt, selbst wenn das Substrat während dem Verfahren transportiert wird oder wenn die mindestens eine Oberfläche zumindest teilweise senkrecht, schräg oder nicht-planar verläuft. Auf diese Weise wird gewährleistet, dass die sehr homogene Verteilung der Silicium-Partikel bis zum Aufschmelzen der Partikel bestehen bleibt. Durch die homogene Verteilung der Silicium-Partikel wird schließlich ein sehr definierter Auftrag des Siliciums erreicht. Dieser sehr definierte Auftrag ermöglicht es, dass an den einzelnen Stellen der zu behandelnden Oberfläche jeweils einerseits eine ausreichend hohe Silicium-Menge (mithilfe der wässrigen Suspension) aufgetragen werden kann, sodass letztlich eine ausreichende Versiegelung der Oberfläche bzw. ein ausreichender Verschluss der oberflächennahen Poren erreicht werden kann, und andererseits das Aufnahmevolumen der Poren für die Silicium-Schmelze nicht überschritten wird, sodass Silicium-Rückstände auf der behandelten Oberfläche zumindest weitgehend vermieden werden können. Besonders bei sehr dichten und damit schlecht infiltrierbaren Materialien bzw. Substraten ist der sehr definierte Silicium-Auftrag besonders vorteilhaft.

Die durch das erfindungsgemäße Verfahren erhaltenen Substrate weisen durch das Vorhandensein des Siliciumcarbids in den Poren in der Infiltrationszone des Substrats sowohl eine erhöhte Härte als auch eine erhöhte Verschleißfestigkeit auf. Bereits aus diesem Grund ist die Widerstandsfähigkeit der mit dem erfindungsgemäßen Verfahren erhaltenen Substrate stark erhöht.

Da zudem eine nahezu oder im Wesentlichen vollständige Versiegelung der behandelten Oberfläche bzw. ein nahezu oder im Wesentlichen vollständiger Verschluss der oberflächennahen Poren erreicht werden kann, kann auf diese Weise ein Eindringen von Gasen bzw. Fluiden in das Material und dementsprechend eine Interaktion mit korrosiven Medien (z.B. Sauerstoff), die zur Degradation des Kohlenstoffmaterials des Substrats führen würde, verhindert werden. Dies trägt ebenfalls zur hohen Widerstandsfähigkeit der mit dem erfindungsgemäßen Verfahren erhaltenen Substrate bei.

Hierbei ist zu betonen, dass mit dem erfindungsgemäßen Verfahren eine bessere bzw. vollständigere Versiegelung der behandelten Oberfläche erreicht werden kann als mit den aus dem Stand der Technik bekannten Verfahren, wie z.B. Verfahren, bei denen eine Beschichtung mittels CVI erfolgt. In der Folge können mit dem erfindungsgemäßen Verfahren Substrate erhalten werden, die eine niedrigere Permeabilität und die eine geringere offene Porosität in der Infiltrationszone aufweisen als gemäß dem Stand derTechnik behandelte Substrate.

Zudem wird mit dem erfindungsgemäßen Verfahren auch eine bessere bzw. vollständigere Versiegelung der behandelten Oberfläche erreicht als mit Verfahren, bei denen eine Beschichtung mittels Auftrag von Silicium-Partikeln ohne Verwendung einer Suspension oder eine Beschichtung unter Verwendung einer Suspension mit Silicium-Partikeln aber ohne Wasser und/oder Bindemittel erfolgt. Folglich können mit dem erfindungsgemäßen Verfahren Substrate erhalten werden, die eine niedrigere Permeabilität und die eine geringere offene Porosität in der Infiltrationszone aufweisen als Substrate, die gemäß Verfahren behandelt wurden, bei denen eine Beschichtung mittels Auftrag von Silicium-Partikeln ohne Verwendung einer Suspension oder eine Beschichtung unter Verwendung einer Suspension mit Silicium-Partikeln aber ohne Wasser und/oder Bindemittel erfolgt.

Gleichzeitig zeichnen sich die mit dem erfindungsgemäßen Verfahren erhaltenen Substrate durch eine hohe Oberflächengüte aus, ohne dass hierfür eine aufwendige Nachbearbeitung notwendig ist. So wird im erfindungsgemäßen Verfahren durch die Verwendung einer wässrigen Suspension umfassend Silicium-Partikel, mindestens ein Bindemittel und Wasser ein sehr definierter Silicium-Auftrag ermöglicht, durch welchen die Ablagerung von Silicium-Rückständen auf der Oberfläche des Substrats, die zu einer Reduzierung der Oberflächengüte führen würden, zumindest weitgehend vermieden werden kann. Zudem kann auch auf eine aufwendige Nachbearbeitung zur Entfernung solcher Silicium-Rückstände (z.B. ein zusätzlicher Schleif- bzw. abrasiver Arbeitsschritt zum Abgetragen der Silicium-Rückstände) verzichtet werden.

Da im erfindungsgemäßen Verfahren auf aufwendige Beschichtungsprozesse und -technologien, wie z.B. CVD-Verfahren, verzichtet werden kann und zudem auch eine Nachbearbeitung der Substrate zur Entfernung von Silicium-Rückständen nicht erforderlich ist, ist das erfindungsgemäße Verfahren auf einfache Weise durchführbar und zudem kostengünstig.

Somit wird mit dem erfindungsgemäßen Verfahren ein einfaches und kostengünstiges Verfahren zur Behandlung von porösen Substraten angegeben, mit welchem Substrate mit einer hohen Widerstandsfähigkeit und einer hohen Oberflächengüte erhalten werden können.

Eine bevorzugte Variante des erfindungsgemäßen Verfahrens zeichnet sich dadurch aus, dass die Silicium-Partikel eine mittlere Partikelgröße (d50-Wert) im Bereich von 10 µm bis 3500 µm, bevorzugt von 310 µm bis 1700 µm, besonders bevorzugt von 500 bis 1000 µm, aufweisen. Durch eine solche mittlere Partikelgröße der Silicium-Partikel können Silicium-Rückstände auf der behandelten Oberfläche noch besser vermieden werden, sodass das erhaltene Substrat eine noch höhere Oberflächengüte aufweist. Insbesondere bei einer Partikelgröße von mindestens 310 µm, vorzugsweise von mindestens 500 µm, können die Silicium-Partikel während des Infiltrationsprozesses noch effektiver aufgeschmolzen werden und die entstehende Schmelze kann sich noch effizienter auf der zu behandelnden Oberfläche verteilen. Somit kann die Silicium-Schmelze bei entsprechender Dosierung vollständig, rückstandslos und flächendeckend vom Graphitsubstrat aufgenommen werden. Auf diese Weise können Silicium-Rückstände auf der behandelten Oberfläche vollständig vermieden werden, sodass eine noch höhere Oberflächengüte erhalten wird, ohne dass hierfür eine Nachbearbeitung zur Entfernung von Silicium-Rückständen nötig ist.

Die mittlere Partikelgröße (d50-Wert) der Silicium-Partikel kann beispielsweise bestimmt werden mittels Laserbeugung (z.B. gemäß ISO 13320:2020-01).

Eine weitere bevorzugte Variante des erfindungsgemäßen Verfahrens ist dadurch gekennzeichnet, dass das mindestens eine Bindemittel
- eine Haftfestigkeit der Silicium-Beschichtung von mindestens 0,15 MPa gewährleistet, und/oder
- ausgewählt ist aus der Gruppe bestehend aus Polyvinylalkohol, Polyethylenglycol, Polyvinylbutyral, Polyacrylsäure, Polyurethan, Chloropren-Kautschuk, Phenolharz, Acrylharz, Cellulose, Cellulose-Derivaten, Alginsäure, Dextrin, und Mischungen hiervon.

Die Haftfestigkeit der Silicium-Beschichtung kann beispielsweise bestimmt werden mittels Abreißversuch gemäß DIN EN ISO 4624:2016-08.

Vorzugsweise ist das mindestens eine Bindemittel mindestens ein organisches Bindemittel. Besonders bevorzugt ist das mindestens eine Bindemittel ausgewählt aus der Gruppe bestehend aus Polyvinylalkohol, Polyethylenglycol, Polyvinylbutyral, Polyacrylsäure, Polyurethan, Chloropren-Kautschuk, Phenolharz, Acrylharz, Cellulose, Cellulose-Derivaten, Alginsäure, Dextrin, und Mischungen hiervon. Durch ein solches Bindemittel kann eine besonders hohe Haftfestigkeit der Silicium-Beschichtung erreicht werden.

Die Cellulose-Derivate sind vorzugsweise ausgewählt aus der Gruppe bestehend aus Celluloseether, Methylcellulose, Carboxymethylcellulose, Ethylcellulose, Hydroxyethylcellulose, Hydroxypropylcellulose sowie Mischungen hiervon.

Beispielsweise kann als Bindemittel das Produkt "Peptapon 520" von Zschimmer & Schwarz Chemie GmbH verwendet werden.

Eine weitere bevorzugte Variante des erfindungsgemäßen Verfahrens zeichnet sich dadurch aus, dass die mindestens eine wässrige Suspension
- 1 bis 50 Gew.-%, bevorzugt 5 bis 35 Gew.-%, der Silicium-Partikel, bezogen auf das Gesamtgewicht der mindestens einen wässrigen Suspension, enthält, und/oder
- 0,01 bis 10 Gew.-%, bevorzugt 0,03 bis 3 Gew.-%, besonders bevorzugt 0,05 bis 0,3 Gew.-%, des mindestens einen Bindemittels, bezogen auf das Gesamtgewicht der mindestens einen wässrigen Suspension, enthält.

Über den Anteil der Silicium-Partikel in der mindestens einen wässrigen Suspension kann die aufgetragene Silicium-Menge variiert werden. Durch Verwendung von 0,01 bis 3 Gew.-%, bevorzugt 0,05 bis 0,3 Gew.-%, des mindestens einen Bindemittels, bezogen auf das Gesamtgewicht der mindestens einen wässrigen Suspension kann eine besonders vorteilhafte Haftwirkung erreicht werden.

Gemäß einer weiteren bevorzugten Variante des erfindungsgemäßen Verfahrens erfolgt das Aufbringen der mindestens einen wässrigen Suspension in Schritt a) mittels Tauchen, Pinseln, Rakeln und/oder Sprühauftragung. Besonders bevorzugt erfolgt das Aufbringen der mindestens einen wässrigen Suspension in Schritt a) mittels Sprühauftragung. Mit diesen Methoden können flächige sowie dreidimensionale und komplexe Bauteile auf besonders einfache Weise homogen mit der mindestens einen wässrigen Suspension versehen werden. Ein besonders homogener Auftrag ist hierbei mittels Sprühauftragung möglich. Zudem kann mit den genannten Methoden, insbesondere mit der Sprühauftragung, die aufgetragene Suspensionsmenge und damit die Silicium-Menge pro Flächeneinheit sehr definiert eingestellt werden, wodurch ein noch definierterer Auftrag der mindestens einen wässrigen Suspension und damit der der Silicium-Menge ermöglicht wird. Eine Beeinflussung der aufgetragenen Suspensionsmenge ist auch über die Anzahl der jeweiligen Beschichtungszyklen möglich.

Vorzugweise wird durch das Aufbringen der mindestens einen wässrigen Suspension in Schritt a) eine Silicium-Menge (bzw. eine Menge an Silicium-Partikeln) von 0,003 bis 0,5 g/cm², bevorzugt von 0,01 bis 0,2 g/cm², besonders bevorzugt von 0,02 bis 0,1 g/cm², ganz besonders bevorzugt von 0,03 bis 0,08 g/cm², insbesondere von 0,04 bis 0,07 g/cm², auf der mindestens einen Oberfläche aufgebracht.

Vorzugsweise wird in Schritt a) eine Menge der wässrige Suspension von 0,001 g/cm² bis 1,5 g/cm², bevorzugt von 0,005 g/cm² bis 0,5 g/cm², besonders bevorzugt von 0,06 g/cm² bis 0,4 g/cm², auf die mindestens eine Oberfläche aufgetragen.

Eine weitere bevorzugte Variante des erfindungsgemäßen Verfahrens ist dadurch gekennzeichnet, dass der Trocknungsprozess bei einer Temperatur im Bereich von 10 °C bis 200 °C, bevorzugt von 80 °C bis 100 °C, und/oder über eine Dauer von 5 h bis 48 h, bevorzugt von 10 h bis 12 h, erfolgt.

Eine weitere bevorzugte Variante des erfindungsgemäßen Verfahrens zeichnet sich dadurch aus, dass die mindestens eine Wärmebehandlung
- bei einer Temperatur im Bereich von 1400 °C bis 1800 °C, bevorzugt von 1450 °C bis 1550 °C, erfolgt, und/oder
- über eine Dauer von 1 h bis 10 h, bevorzugt von 4 h bis 6 h, erfolgt, und/oder
- unter
   o Vakuum oder
   o Inertgasatmosphäre, bevorzugt Argon-Atmosphäre, bei einem (Prozess-)Druck von 10 mbar bis 2000 mbar, bevorzugt von 100 mbar bis 1800 mbar, besonders bevorzugt von 500 mbar bis 1500 mbar, ganz besonders bevorzugt von 800 mbar bis 1200 mbar,
erfolgt.

Eine weitere bevorzugte Variante des erfindungsgemäßen Verfahrens zeichnet sich dadurch aus, dass die mindestens eine Wärmebehandlung
- bei einer Temperatur im Bereich von 1400 °C bis 1800 °C, bevorzugt von 1450 °C bis 1550 °C, erfolgt, und/oder
- über eine Dauer von 1 h bis 10 h, bevorzugt von 4 h bis 6 h, erfolgt, und/oder
- unter Inertgasatmosphäre, bevorzugt Argon-Atmosphäre, und/oder
- bei einem (Prozess-)Druck von 10 mbar bis 2000 mbar, bevorzugt von 100 mbar bis 1800 mbar, besonders bevorzugt von 500 mbar bis 1500 mbar, ganz besonders bevorzugt von 800 mbar bis 1200 mbar,
erfolgt.

Durch Variation der Gasatmosphäre, der Temperatur, der Dauer und/oder des Prozessdrucks kann die Dicke der Infiltrationszone (bzw. die Infiltrationstiefe) und damit der Grad der Versiegelung beeinflusst und eingestellt werden.

Eine weitere bevorzugte Variante des erfindungsgemäßen Verfahrens ist dadurch gekennzeichnet, dass
- das poröse kohlenstoffhaltige Substrat ein Material enthält oder daraus besteht, welches ausgewählt ist aus der Gruppe bestehend aus Graphit, vorzugsweise iso-Graphit; Kohlenstoff-Faser verstärktem Kohlenstoff; Siliciumcarbid-Faser verstärktem Kohlenstoff; Siliciumcarbid-Faser verstärktem Siliciumcarbid; Glaskohlenstoff; gesintertem Siliciumcarbid; Silicium infiltriertem Siliciumcarbid; und Kombinationen hiervon, und/oder
- das poröse kohlenstoffhaltige Substrat ein Material enthält oder daraus besteht, welches einen thermischen Ausdehnungskoeffizienten (bzw. einen Wärmeausdehnungskoeffizienten) von mindestens 2,0 · 10⁻⁶ K⁻¹, bevorzugt von mindestens 2,8 · 10⁻⁶ K⁻¹, besonders bevorzugt von mindestens 3,0 · 10⁻⁶ K⁻¹, ganz besonders bevorzugt von mindestens 3,2 · 10⁻⁶ K⁻¹, aufweist, und/oder
- das poröse kohlenstoffhaltige Substrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist, und/oder
- die Poren des porösen kohlenstoffhaltigen Substrats einen mittleren Porendurchmesser im Bereich von 0,1 µm bis 100 µm, bevorzugt von 0,1 µm bis 10 µm, besonders bevorzugt von 1 µm bis 5 µm, ganz besonders bevorzugt von 1,5 µm bis 5 µm, aufweisen.

Das poröse kohlenstoffhaltige Substrat enthält vorzugsweise Graphit, besonders bevorzugt iso-Graphit.

Vorzugsweise handelt es sich bei dem porösen kohlenstoffhaltigen Substrat um ein poröses Graphit-Substrat, besonders bevorzugt um ein poröses iso-Graphit-Substrat. Für Graphit-Substrate, insbesondere iso-Graphit-Substrate, ist das erfindungsgemäße Verfahren besonders vorteilhaft, da diese eine hohe Dichte aufweisen und deshalb schlecht infiltrierbar sind. Mit dem erfindungsgemäßen Verfahren können aufgrund des sehr definierten Auftrags der wässrigen Suspension und der daraus resultierenden Vorteile auch diese Substrate problemlos behandelt werden.

Unter iso-Graphit wird Graphit verstanden, der nach dem Verfahren des isostatischen Pressens hergestellt wurde.

Beispielsweise kann das poröse Substrat ein Tiegel, vorzugsweise ein Graphit-Tiegel, ganz besonders bevorzugt ein iso-Graphit-Tiegel, sein.

Vorzugsweise enthält das poröse kohlenstoffhaltige Substrat ein Material oder besteht daraus, welches einen thermischen Ausdehnungskoeffizienten (bzw. einen Wärmeausdehnungskoeffizienten) von mindestens 2,8 · 10⁻⁶ K⁻¹, bevorzugt von mindestens 3,0 · 10⁻⁶ K⁻¹, besonders bevorzugt von mindestens 3,2 · 10⁻⁶ K⁻¹, aufweist. Auf diese Weise kann das Risiko von Rissbildungen und Verformungen des Substrats während dem Verfahren verringert werden.

Der thermische Ausdehnungskoeffizient (bzw. der Wärmeausdehnungskoeffizient) kann beispielsweise bestimmt werden gemäß DIN 51909:2009-05.

Bei der Infiltration von flüssigem Silicium in ein kohlenstoffhaltiges Substrat kommt es generell zur chemischen Reaktion von Silicium und Kohlenstoff zu Siliciumcarbid (SiC) und folglich zur Bildung SiC in den Poren. Mit der damit verbundenen Zunahme des Volumens während der SiC-Bildung werden mechanische Spannungen in das kohlenstoffhaltige Material induziert, welche mit zunehmender Infiltrationstiefe ansteigen. Zusätzlich können mit zunehmender Differenz zwischen den thermischen Ausdehnungskoeffizienten des kohlenstoffhaltigen Materials und SiC ebenfalls thermische Spannungen während der Wärmebehandlung auftreten. Wird dabei die mechanische Stabilität des kohlenstoffhaltigen Materials überschritten, kann es zu einer Rissbildung im Substrat und somit zur Zerstörung des Bauteils kommen. Durch Verwendung eines kohlenstoffhaltigen Materials mit einer hohen mechanischen Stabilität, z.B. gekennzeichnet durch eine hohe Biegefestigkeit und/oder eine hohe Druckfestigkeit, kann das Risiko von Rissbildungen und Verformungen des Substrats verringert werden. Ebenso kann das Risiko von Rissbildungen und Verformungen des Substrats verringert werden, wenn das kohlenstoffhaltige Material einen geeigneten Wärmeausdehnungskoeffizienten, d.h. einen Wärmeausdehnungskoeffizienten mit möglichst geringem Unterschied zum Wärmeausdehnungskoeffizienten von Siliciumcarbid, aufweist.

Vorzugsweise enthält das poröse kohlenstoffhaltige Substrat ein Material oder besteht daraus, welches eine Biegefestigkeit von mindestens 30 MPa, bevorzugt von mindestens 45 MPa, besonders bevorzugt von mindestens 50 MPa, ganz besonders bevorzugt von mindestens 60 MPa, insbesondere von mindestens 70 MPa und/oder eine Druckfestigkeit von mindestens 50 MPa, bevorzugt von mindestens 90 MPa, besonders bevorzugt von mindestens 110 MPa, ganz besonders bevorzugt von mindestens 130 MPa, insbesondere von mindestens 140 MPa, aufweist.

Es ist bevorzugt, dass das poröse kohlenstoffhaltige Substrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist und/oder die Poren des porösen kohlenstoffhaltigen Substrats einen mittleren Porendurchmesser im Bereich von 0,1 µm bis 10 µm, bevorzugt von 1 µm bis 5 µm, besonders bevorzugt von 1,5 µm bis 5 µm, aufweisen. Auf diese Weise kann eine besonders guter Verschluss der oberflächennahen Poren bzw. eine besonders gute Versiegelung der behandelten Oberfläche erreicht werden, was sich durch eine sehr geringe Permeabilität des Substrats sowie eine nur sehr geringe offene Porosität in der Infiltrationszone zeigt. Ganz besonders vorteilhaft ist es hierbei, wenn das poröse kohlenstoffhaltige Substrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist und die Poren des porösen kohlenstoffhaltigen Substrats einen mittleren Porendurchmesser im Bereich von 0,1 µm bis 10 µm, bevorzugt von 1 µm bis 5 µm, besonders bevorzugt von 1,5 µm bis 5 µm, aufweisen.

Die offene Porosität des porösen kohlenstoffhaltigen Substrats wird bestimmt mittels Quecksilberporosimetrie (z.B. gemäß DIN 66133:1993-06).

Der mittlere Porendurchmesser der Poren des porösen kohlenstoffhaltigen Substrats kann beispielsweise bestimmt werden mittels Quecksilberporosimetrie (z.B. gemäß DIN 15901-1:2019-03).

Vorzugsweise wird die Infiltrationstiefe der Schmelze (bzw. die Dicke der Infiltrationszone) durch
- die Menge pro Flächeneinheit der auf der mindestens einen Oberfläche aufgetragenen mindestens einen wässrigen Suspension, und/oder
- den Anteil an Silicium-Partikeln in der mindestens einen wässrigen Suspension, und/oder
- die Gasatmosphäre während der mindestens einen Wärmebehandlung, und/oder
- die Temperatur während der mindestens einen Wärmebehandlung, und/oder
- die Dauer während der mindestens einen Wärmebehandlung, und/oder
- den Prozessdruck während der mindestens einen Wärmebehandlung
eingestellt. Über die Dicke der Infiltrationszone bzw. die Infiltrationstiefe der Schmelze kann der Versiegelungsgrad der behandelten Oberfläche eingestellt werden.

Gemäß einer weiteren bevorzugten Variante des erfindungsgemäßen Verfahrens wird die Infiltrationstiefe der Schmelze (bzw. die Dicke der Infiltrationszone) durch die Menge pro Flächeneinheit der auf der mindestens einen Oberfläche aufgetragenen mindestens einen wässrigen Suspension und/oder durch den Druck während der mindestens einen Wärmebehandlung eingestellt. Über die Dicke der Infiltrationszone bzw. die Infiltrationstiefe der Schmelze kann der Versiegelungsgrad der behandelten Oberfläche eingestellt werden.

Gemäß einer besonders bevorzugten Verfahrensvariante wird die Infiltrationstiefe der Schmelze (bzw. die Dicke der Infiltrationszone) durch den Druck der Atmosphäre, bevorzugt der Argon-Atmosphäre, während der mindestens eine Wärmebehandlung eingestellt. Hierbei kann Infiltrationstiefe auch unabhängig vom kohlenstoffhaltigen Material über die Auswahl des entsprechenden Prozessdrucks beeinflusst werden.

Eine weitere bevorzugte Variante des erfindungsgemäßen Verfahrens ist dadurch gekennzeichnet, dass nach Schritt b) mindestens eine wässrige Suspension enthaltend mindestens ein Refraktärmetallcarbid (z.B. Tantalcarbid) und Wasser auf die mindestens eine Oberfläche des kohlenstoffhaltigen Substrats aufgebracht wird und das Substrat anschließend einem Sinterprozess unterzogen wird.

Die vorliegende Erfindung betrifft zudem ein Substrat bzw. (oberflächen-)behandeltes Substrat umfassend ein kohlenstoffhaltiges Substratmaterial mit Poren, wobei das Substrat an mindestens einer Oberfläche eine Infiltrationszone aufweist, in der die Poren des Substratmaterials zumindest teilweise mit Siliciumcarbid gefüllt sind, wobei das Substrat bzw. behandelte Substrat eine (Gas-)Permeabilität von maximal 5 · 10⁻¹⁵ m² aufweist und wobei das Substrat bzw. behandelte Substrat in der Infiltrationszone eine offene Porosität, bestimmt mittels Quecksilberporosimetrie, von maximal 10 % aufweist.

Die (Gas-)Permeabilität des behandelten Substrats kann beispielsweise bestimmt werden mittels Differenzdruckverfahren (z.B. gemäß EN 993-4 : 1995).

Die offene Porosität in der Infiltrationszone des behandelten Substrats wird bestimmt mittels Quecksilberporosimetrie (z.B. gemäß DIN 66133:1993-06).

Bei der Infiltrationszone handelt es sich letztlich um den Bereich bzw. die Bereiche des behandelten Substrats, in welchem/welchen Siliciumcarbid in den Poren des Substratmaterials vorhanden ist. In dem/den Bereich(en) des behandelten Substrats außerhalb der Infiltrationszone ist kein Siliciumcarbid in den Poren des Substratmaterials vorhanden. Die Infiltrationszone erstreckt sich somit von der mindestens einen Oberfläche des behandelten Substrats bis zu der/den am weitesten von der mindestens einen Oberfläche entfernten Stelle(n) des behandelten Substrats, bis zu welcher/welchen Siliciumcarbid in den Poren des Substratmaterials (durchgehend von der mindestens einen Oberfläche aus) vorhanden ist.

Vorzugsweise beträgt der Anteil an elementaren Silicium, welches auf der mindestens einen Oberfläche abgelagert ist, bezogen auf das Gesamtgewicht des behandelten Substrats maximal 0,01 Gew.-%, besonders bevorzugt maximal 0,001 Gew.-%.

Vorzugsweise weist das behandelte Substrat auf der mindestens einen Oberfläche keine Rückstände von elementaren Silicium-Partikeln mit einem Partikeldurchmesser von mindestens 500 µm auf. Die Partikelgröße der Silicium-Partikel kann beispielsweise bestimmt werden mittels Laserbeugung (z.B. gemäß ISO 13320:2020-01).

Besonders bevorzugt weist das behandelte Substrat auf der mindestens einen Oberfläche keine Rückstände von elementarem Silicium (bzw. kein elementares Silicium) auf.

Ganz besonders bevorzugt enthält das behandelte Substrat keine Rückstände von elementarem Silicium (bzw. kein elementares Silicium).

Vorzugsweise sind die Poren des Substratmaterials in der Infiltrationszone mit keinem weiteren Stoff außer Siliciumcarbid gefüllt (oder teilweise gefüllt).

Vorzugsweise sind die die Poren des Substratmaterials in der Infiltrationszone vollständig mit Siliciumcarbid gefüllt

Eine bevorzugte Ausführungsform des erfindungsgemäßen behandelten Substrats zeichnet sich dadurch aus, dass das behandelte Substrat
- eine Permeabilität von maximal 1 · 10⁻¹⁶ m², bevorzugt von maximal 1 · 10⁻¹⁷ m², besonders bevorzugt von maximal 1 · 10⁻¹⁹ m², aufweist, und/oder
- eine Permeabilität aufweist, die um einen Faktor von mindestens 10, bevorzugt von mindestens 100, geringer ist als eine (bzw. die) Permeabilität des Substrats vor der Behandlung, und/oder
- in der Infiltrationszone eine offene Porosität, bestimmt mittels Quecksilberporosimetrie, von maximal 8 %, bevorzugt maximal 5 %, aufweist, und/oder
- in der Infiltrationszone eine offene Porosität, bestimmt mittels Quecksilberporosimetrie aufweist, die um mindestens 7 %, bevorzugt um mindestens 10 %, besonders bevorzugt um mindestens 12 %, bezogen auf das Gesamtvolumen des behandelten Substrats, geringer ist als eine (bzw. die) offene Porosität (bestimmt mittels Quecksilberporosimetrie) des behandelten Substrats außerhalb der Infiltrationszone, und/oder
- einen spezifischen Widerstand von maximal 1500 mΩcm, bevorzugt von maximal 10 mΩcm, aufweist, und/oder
- kein elementares Silicium aufweist.

Die (Gas-)Permeabilität des behandelten Substrats und/oder die (Gas-)Permeabilität des Substrats vor der Behandlung können beispielsweise bestimmt werden mittels Differenzdruckverfahren (z.B. gemäß EN 993-4 : 1995).

Das Vorhandensein des Merkmals, dass das behandelte Substrat eine Permeabilität aufweist, die um einen Faktor von mindestens 10, bevorzugt von mindestens 100, geringer ist als die Permeabilität des Substrats vor der Behandlung, kann beispielsweise lediglich am behandelten Substrat bestimmt werden, indem zunächst die Permeabilität des behandelten Substrats, z.B. mittels Differenzdruckverfahren (z.B. gemäß EN 993-4 : 1995), bestimmt wird, anschließend die Infiltrationszone vom behandelten Substrat entfernt wird, z.B. durch Abschleifen, danach die Permeabilität dieses so erhaltenen Substrats ohne Infiltrationszone, z.B. mittels Differenzdruckverfahren (z.B. gemäß EN 993-4 : 1995), bestimmt wird, und schließlich die beiden bestimmte Permeabilitäten miteinander verglichen bzw. in ein entsprechendes Verhältnis gesetzte werden. Die Permeabilität des behandelten Substrats, von dem die Infiltrationszone entfernt wurde, entspricht dabei der Permeabilität des unbehandelten Substrats.

Die offene Porosität in der Infiltrationszone des behandelten Substrats und die offene Porosität des behandelten Substrats außerhalb der Infiltrationszone werden bestimmt mittels Quecksilberporosimetrie (z.B. gemäß DIN 66133:1993-06).

Die offene Porosität des behandelten Substrats außerhalb der Infiltrationszone entspricht der offenen Porosität des unbehandelten Substrats (auch im Bereich der späteren Infiltrationszone).

Eine weitere bevorzugte Ausführungsform des erfindungsgemäßen behandeltes Substrats ist dadurch gekennzeichnet, dass
- die Infiltrationszone eine mittlere Dicke von mindestens 100 µm, bevorzugt von 100 µm bis 1200 µm, besonders bevorzugt von 200 µm bis 800 µm, aufweist, und/oder
- das Siliciumcarbid, mit dem die Poren des Substratmaterials in der Infiltrationszone zumindest teilweise gefüllt sind, 3C-SiC (3C-Siliciumcarbid) enthält, vorzugsweise 3C-SiC (3C-Siliciumcarbid) als Hauptphase aufweist.

Die (mittlere) Dicke der Infiltrationszone kann auch als (mittlere) Infiltrationstiefe bezeichnet werden. Mit anderen Worten liegt die mittlere Infiltrationstiefe vorzugweise in einem Bereich von mindestens 100 µm, bevorzugt von 100 µm bis 1200 µm, besonders bevorzugt von 200 µm bis 800 µm. Die Dicke der Infiltrationszone bzw. die Infiltrationstiefe erstreckt sich von der behandelten Oberfläche bis zum der behandelten Oberfläche gegenüberliegenden Rand der Infiltrationszone.

Die mittlere Dicke der Infiltrationszone bzw. die mittlere Infiltrationstiefe kann beispielsweise dadurch bestimmt werden, dass einzelne Messwerte für die Dicke der Infiltrationszone bzw. die Infiltrationstiefe an verschiedenen über die gesamte Länge und/oder Breite der Infiltrationszone verteilten Stellen mittels optischer Mikroskopie an Querschliffen (vertikal zur Infiltrationsrichtung) bestimmt und dann ein Mittelwert der einzelnen Messwerte berechnet wird. Hierbei kann die Dicke der Infiltrationszone bzw. die Infiltrationstiefe über die gesamte Länge und/oder Breite der Infiltrationszone gemittelt werden.

Die mittlere Dicke der Infiltrationszone bzw. die mittlere Infiltrationstiefe kann beispielsweise bestimmt werden gemäß DIN EN ISO 1463:2021-08.

Dass das Siliciumcarbid, mit dem die Poren des Substratmaterials in der Infiltrationszone zumindest teilweise gefüllt sind, 3C-SiC enthält, kann beispielsweise bestimmt werden mittels Röntgendiffraktometrie (XRD).

Vorzugsweise weist das Siliciumcarbid, mit dem die Poren des Substratmaterials in der Infiltrationszone zumindest teilweise gefüllt sind, 3C-SiC (3C-Siliciumcarbid) als Hauptphase auf.

Dass das Siliciumcarbid, mit dem die Poren des Substratmaterials in der Infiltrationszone zumindest teilweise gefüllt sind, 3C-SiC als Hauptphase aufweist, bedeutet, dass das Siliciumcarbid, mit dem die Poren des Substratmaterials in der Infiltrationszone zumindest teilweise gefüllt sind, eine 3C-Siliciumcarbid-Phase aufweist und keine weiteren Phasen aufweist, die einen höheren gewichtsprozentualen Anteil am gesamten Siliciumcarbid, mit dem die Poren des Substratmaterials in der Infiltrationszone zumindest teilweise gefüllt sind, haben, als die 3C-Siliciumcarbid-Phase.

Dass das Siliciumcarbid, mit dem die Poren des Substratmaterials in der Infiltrationszone zumindest teilweise gefüllt sind, 3C-SiC als Hauptphase aufweist, kann beispielsweise bestimmt werden mittels Röntgendiffraktometrie (XRD).

3C-SiC (3C-Siliciumcarbid) kann auch β-SiC (β-Siliciumcarbid) bezeichnet werden.

Vorzugsweise weist das Siliciumcarbid, mit dem die Poren des Substratmaterials in der Infiltrationszone zumindest teilweise gefüllt sind, einen Anteil von mindestens 50 Gew.-%, bevorzugt einen Anteil von mindestens 70 Gew.-%, besonders bevorzugt einen Anteil von mindestens 90 Gew.-%, ganz besonders bevorzugt einen Anteil von mindestens 95 Gew.-%, beispielsweise einen Anteil von mindestens 99 Gew.-%, 3C-SiC (3C-Siliciumcarbid) bzw. β-SiC (β-Siliciumcarbid) auf.

Vorzugsweise weist das Siliciumcarbid, mit dem die Poren des Substratmaterials in der Infiltrationszone zumindest teilweise gefüllt sind, einen Anteil von höchstens 5 Gew.-%, bevorzugt einen Anteil von höchstens 1 Gew.-%, besonders bevorzugt einen Anteil von höchstens 0,1 Gew.-%, α-SiC (α-Siliciumcarbid) auf. Ganz besonders bevorzugt enthält das Siliciumcarbid, mit dem die Poren des Substratmaterials in der Infiltrationszone zumindest teilweise gefüllt sind, kein α-SiC (α-Siliciumcarbid).

Der Anteil von 3C-SiC bzw. β-SiC und/oder der Anteil von α-SiC am Siliciumcarbid, mit dem die Poren des Substratmaterials in der Infiltrationszone zumindest teilweise gefüllt sind kann/können beispielswese bestimmt werden mittels Röntgendiffraktometrie (XRD).

Eine ganz besonders bevorzugte Ausführungsform des erfindungsgemäßen Substrats ist dadurch gekennzeichnet, dass die Infiltrationszone eine mittlere Dicke von mindestens 100 µm (z.B. 100 µm bis 1200 µm), bevorzugt von mindestens 200 µm (z.B. 200 µm bis 800 µm), aufweist und das Siliciumcarbid, mit dem die Poren des Substratmaterials in der Infiltrationszone zumindest teilweise gefüllt sind, β-SiC (bzw. 3C-SiC) enthält, vorzugsweise β-SiC (bzw. 3C-SiC) als Hauptphase aufweist.

Dass das Siliciumcarbid, mit dem die Poren des Substratmaterials in der Infiltrationszone zumindest teilweise gefüllt sind, β-SiC (bzw. 3C-SiC) als Hauptphase aufweist, kann beispielsweise bestimmt werden mittels Röntgendiffraktometrie (XRD).

Eine weitere bevorzugte Ausführungsform des erfindungsgemäßen behandelten Substrats ist dadurch gekennzeichnet, dass das kohlenstoffhaltige Material ausgewählt ist aus der Gruppe bestehend aus Graphit, vorzugsweise iso-Graphit; Kohlenstoff-Faser verstärktem Kohlenstoff; Siliciumcarbid-Faser verstärktem Kohlenstoff; Siliciumcarbid-Faser verstärktem Siliciumcarbid; gesintertem Siliciumcarbid; Glaskohlenstoff; und Kombinationen hiervon.

Eine weitere bevorzugte Ausführungsform des erfindungsgemäßen behandelten Substrats zeichnet sich dadurch aus, dass das behandelte Substrat mit dem erfindungsgemäßen Verfahren herstellbar oder hergestellt ist.

Eine weitere bevorzugte Ausführungsform des erfindungsgemäßen behandelten Substrats ist dadurch gekennzeichnet, dass auf der mindestens einen Oberfläche, an welcher das Substrat eine Infiltrationszone aufweist, mindestens eine Schutzschicht, welche mindestens ein Refraktärmetallcarbid (z.B. Tantalcarbid) enthält, angeordnet ist. Vorzugsweise handelt es sich bei der mindestens einen Schutzschicht um eine Refraktärmetallcarbid-Schicht (z.B. um eine Tantalcarbid-Schicht).

Die vorliegende Erfindung betrifft ferner die Verwendung des erfindungsgemäßen behandelten Substrats als Komponente für Hochtemperaturöfen, bevorzugt Heizer, Isolationskomponente, Halterung; als Tiegel oder Tiegelelement.

Die vorliegende Erfindung wird anhand der nachfolgenden Figuren und Beispiele näher erläutert, ohne die Erfindung auf die speziell dargestellten Parameter zu beschränken.

### Ausführungsbeispiel 1

Vier verschiedene poröse Graphit-Substrate werden bereitgestellt, die sich jeweils im mittleren Porendurchmesser voneinander unterscheiden. Die Poren des Graphit-Substrats 1A weisen einen mittleren Porendurchmesser von 0,6 µm auf, die Poren des Graphit-Substrats 1B weisen einen mittleren Porendurchmesser von 1,5 µm auf, die Poren des Graphit-Substrats 1C weisen einen mittleren Porendurchmesser von 1,8 µm auf, und die Poren des Graphit-Substrats 1D weisen einen mittleren Porendurchmesser von 2,2 µm auf.

Die porösen Graphit-Substrate weisen eine Substratgeometrie von 5×5×1 cm³ auf.

### a) Herstellung der Suspension

Es wird eine Suspension mit folgender Zusammensetzung hergestellt:
- 66,7 Gew.% H₂O dest.
- 0,3 Gew.-% Bindemittel (z.B. Peptapon 520, pulverförmiger Feststoff, Zschimmer & Schwarz Chemie GmbH)
- 33 Gew-% Silicium-Granulat (Si-Bruch, d50 ca. 800 µm)

Zunächst werden das destillierte Wasser (H₂O dest.) und das Bindemittel eingewogen und in ein Gefäß geben. Zur Homogenisierung und Lösung des Bindemittels wird die Suspension 20 h auf Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf Rollenstand bei 30 rpm (Gefäß) ausgelagert.

### b) Beschichtungsvorgang

Die Beschichtung erfolgt mittels Sprühauftragung. Dabei erfolgt eine Zerstäubung der Suspension mittels Druckluft (4 bar). Die Suspension wird mittels Düse zugeführt (Durchmesser 2,5 mm). Die Substrate werden jeweils mit zu beschichtender Fläche (5x5 cm²) senkrecht zur Düse und damit zur Sprühstrahlrichtung gelagert, wobei das jeweilige Substrat mit 10 rpm rotiert wird. Der Abstand von Düse zu Substratoberfläche beträgt 20 cm. Die Beschichtung erfolgt für alle Substrate mit einer Sprühzeit von 8 s. Es erfolgt ein konstanter Auftrag von 0,06 ± 0,015 g Suspension/cm² bzw. 0,02 ± 0,005 g Si/cm².

### c) Trocknungsprozess

Die beschichteten Substrate werden für 20 h bei 90 °C in Luft zum Trocknen in den Wärmeschrank ausgelagert.

### d) Infiltrationsprozess

Die getrockneten Substrate werden in graphitscher Probenkammer in einem Ofen platziert. Die beschichteten Flächen haben dabei keinen Kontakt zu den Ofeneinbauten. Es erfolgt eine Evakuierung des Ofenvolumens (10⁻³ mbar) und ein Aufheizen mit 250 K/h von Raumtemperatur auf 1500°C. Die Temperatur von 1500 °C wird für 5 h gehalten. Danach erfolgt ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme der Substrate.

Die so erhaltenen behandelten Substrate weisen alle an der jeweils behandelten Oberfläche keinerlei Rückstände von elementarem Silicium auf und zeichnen sich somit alle durch eine sehr hohe Oberflächengüte aus.

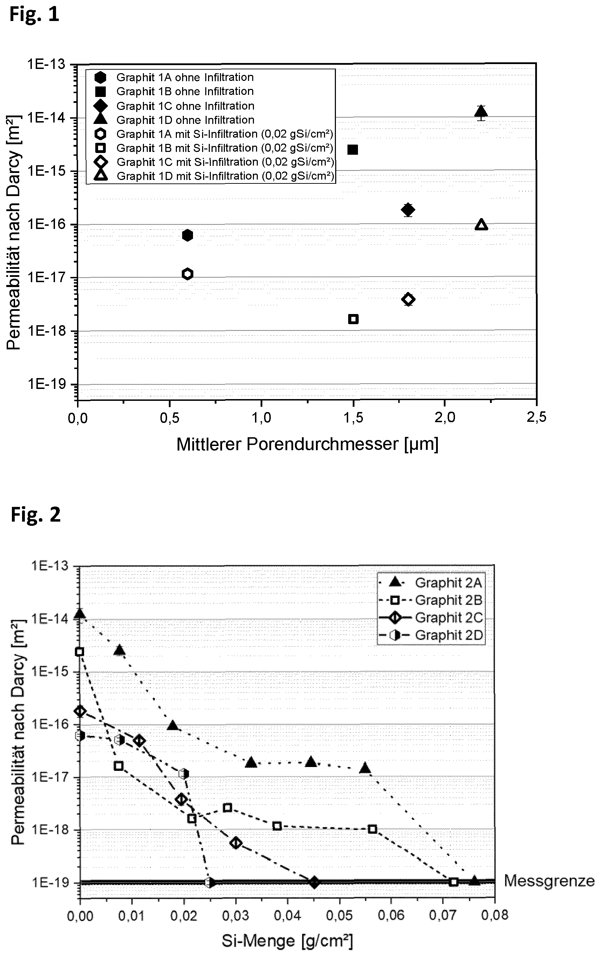

Von den behandelten Substraten wurde die Permeabilität mittels Differenzdruckverfahren (z.B. gemäß EN 993-4 : 1995) bestimmt. Im Diagramm in Fig. 1 wird die Permeabilität der behandelten Substrate mit der Permeabilität der unbehandelten Ausgangs-Substrate verglichen. Wie gut zu erkennen ist, konnte durch die Behandlung mit dem erfindungsgemäßen Verfahren die Permeabilität der Substrate deutlich gesenkt werden. Jedes der behandelten Substrate weist eine Permeabilität von weniger als 5 · 10⁻¹⁵ m² auf. Zudem weisen die behandelten Substrate in der Infiltrationszone eine offene Porosität, bestimmt mittels Quecksilberporosimetrie, von maximal 10 % auf.

Aus der geringen Permeabilität und der geringen offenen Porosität der behandelten Substrate kann geschlossen werden, dass bei jedem der behandelten Substrate die oberflächennahen Poren nahezu oder im Wesentlichen vollständig verschlossen sind und somit die jeweils behandelte Oberfläche nahezu oder im Wesentlichen vollständig versiegelt ist, sodass alle Substrate sehr gut vor einem Eindringen von korrosiven Gasen bzw. Fluiden in das Material geschützt sind. Da das behandelte Substrat, welches durch Behandlung von Graphit-Substrat 1B erhalten wurde, die niedrigste Permeabilität aufweist, ist bei diesem behandelten Substrat die behandelte Oberfläche am besten versiegelt.

### Ausführungsbeispiel 2

Mehrere poröse iso-Graphit-Substrate (Substrate aus isostatisch gepresstem Graphit) vier verschiedener iso-Graphit-Typen werden bereitgestellt. Die Substrate des iso-Graphit-Typs 2A weisen eine Porosität von 15 % und Poren mit einem mittleren Porendurchmesser von 2,2 µm auf. Die Substrate des iso-Graphit-Typs 2B weisen eine Porosität von 14 % und Poren mit einem mittleren Porendurchmesser von 1,5 µm auf. Die Substrate des iso-Graphit-Typs 2C weisen eine Porosität von 10 % und Poren mit einem mittleren Porendurchmesser von 1,8 µm auf. Die Substrate des iso-Graphit-Typs 2D weisen eine Porosität von 10 % und Poren mit einem mittleren Porendurchmesser von 0,6 µm auf.

Die porösen Graphit-Substrate weisen eine Substratgeometrie von 5×5×1 cm³ auf.

### a) Herstellung der Suspension

Es wird eine Suspension mit folgender Zusammensetzung hergestellt:
- 66,7 Gew.% H₂O dest.
- 0,3 Gew.-% Bindemittel (z.B. Peptapon 520, pulverförmiger Feststoff, Zschimmer & Schwarz Chemie GmbH)
- 33 Gew-% Silicium-Granulat (Si-Bruch, d50 ca. 800 µm)

Zunächst werden das destillierte Wasser (H₂O dest.) und das Bindemittel eingewogen und in ein Gefäß geben. Zur Homogenisierung und Lösung des Bindemittels wird die Suspension 20 h auf Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf Rollenstand bei 30 rpm (Gefäß) ausgelagert.

### b) Beschichtungsvorgang

Die Beschichtung erfolgt mittels Sprühauftragung. Dabei erfolgt eine Zerstäubung der Suspension mittels Druckluft (4 bar). Die Suspension wird mittels Düse zugeführt (Durchmesser 2,5 mm). Die Substrate werden jeweils mit zu beschichtender Fläche (5x5 cm²) senkrecht zur Düse und damit zur Sprühstrahlrichtung gelagert, wobei das jeweilige Substrat mit 10 rpm rotiert wird. Der Abstand von Düse zu Substratoberfläche beträgt 20 cm. Die Beschichtung erfolgt mit unterschiedlichen Sprühzeiten von 4 s, 8 s, 12 s, 16 s, 20 s und 24 s. je nach aufzutragender Menge. Dabei erfolgt ein Auftrag pro 4 s von ca. 0,01 ± 0,005 g Si/cm². Nach jedem Beschichtungszyklus von 4 s werden die Proben auf einer Heizplatte an Luft bei 100 °C für 15 min zwischengetrocknet.

Auf die Substrate der vier verschiedenen iso-Graphit-Typen werden unterschiedliche Silicium-Mengen pro Flächeneinheit aufgetragen. Vom iso-Graphit-Typ 2A werden sechs Substrate einem Beschichtungsvorgang unterzogen, wobei die dabei verwendeten Silicium-Mengen pro Flächeneinheit 0,008 g/cm², 0,018 g/cm², 0,033 g/cm², 0,044 g/cm², 0,055 g/cm² und 0,076 g/cm² betragen. Vom iso-Graphit-Typ 2B werden ebenfalls sechs Substrate einem Beschichtungsvorgang unterzogen, wobei die dabei verwendeten Silicium-Mengen pro Flächeneinheit 0,007 g/cm², 0,022 g/cm², 0,028 g/cm², 0,038 g/cm², 0,056 g/cm² und 0,072 g/cm² betragen. Vom iso-Graphit-Typ 2C werden vier Substrate einem Beschichtungsvorgang unterzogen, wobei die dabei verwendeten Silicium-Mengen pro Flächeneinheit 0,011 g/cm², 0,02 g/cm², 0,03 g/cm² und 0,045 g/cm² betragen. Vom iso-Graphit-Typ 2D werden schließlich drei Substrate einem Beschichtungsvorgang unterzogen, wobei die dabei verwendeten Silicium-Mengen pro Flächeneinheit 0,008 g/cm², 0,02 g/cm² und 0,025 g/cm² betragen.

### c) Trocknungsprozess

Die beschichteten Substrate werden für 20 h bei 90 °C in Luft zum Trocknen in den Wärmeschrank ausgelagert.

### d) Infiltrationsprozess

Die getrockneten Substrate werden in graphitscher Probenkammer in einem Ofen platziert. Die beschichteten Flächen haben dabei keinen Kontakt zu den Ofeneinbauten. Es erfolgt eine Evakuierung des Ofenvolumens (10⁻³ mbar) und ein Aufheizen mit 250 K/h von Raumtemperatur auf 1500°C. Die Temperatur von 1500 °C wird für 5 h gehalten. Danach erfolgt ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme der Substrate.

Die so erhaltenen behandelten Substrate weisen alle an der jeweils behandelten Oberfläche keinerlei Rückstände von elementarem Silicium auf und zeichnen sich somit alle durch eine sehr hohe Oberflächengüte aus.

Von den behandelten Substraten wurde die Permeabilität mittels Differenzdruckverfahren (z.B. gemäß EN 993-4 : 1995) bestimmt. Im Diagramm in Fig. 2 sind die ermittelten Werte für die Permeabilität der jeweiligen behandelten Substrate graphisch dargestellt. Zudem ist auch die Permeabilität jeweils eines unbehandelten Ausgangs-Substrats der vier iso-Graphit-Typen im Diagramm eingezeichnet. Wie gut zu erkennen ist, konnte durch die Behandlung mit dem erfindungsgemäßen Verfahren die Permeabilität der Substrate deutlich gesenkt werden. Jedes der behandelten Substrate weist eine Permeabilität ≤ 5 · 10⁻¹⁵ m² auf. Zudem weisen die behandelten Substrate in der Infiltrationszone eine offene Porosität, bestimmt mittels Quecksilberporosimetrie, von maximal 10 % auf.

Aus Fig. 2 wird ersichtlich, dass die Permeabilität mit Erhöhung der aufgetragenen Silicium-Menge abnimmt, wobei bei Graphit-Substrat 2D bereits eine aufgetragene Silicium-Menge von 0,025 gSi/cm² ausreicht um eine Permeabilität ≤ 1 · 10⁻¹⁹ m² und damit unterhalb der Messgrenze zu erhalten. Je höher die Ausgangspermeabilität des unbehandelten Substrates, desto mehr Silicium muss dazu infiltriert werden, um eine Permeabilität ≤ 1 · 10⁻¹⁹ m² und damit unterhalb der Messgrenze zu erhalten.

Aus der geringen Permeabilität und der geringen offenen Porosität der behandelten Substrate kann geschlossen werden, dass bei jedem der behandelten Substrate die oberflächennahen Poren nahezu oder im Wesentlichen vollständig verschlossen sind und somit die jeweils behandelte Oberfläche nahezu oder im Wesentlichen vollständig versiegelt ist, sodass alle Substrate sehr gut vor einem Eindringen von korrosiven Gasen bzw. Fluiden in das Material geschützt sind.

Durch Variation der aufgetragenen Si-Menge kann die Permeabilität bzw. die offene Porosität des Substrates variiert und für den Anwendungsfall entsprechend eingestellt werden.

### Ausführungsbeispiel 3

Mehrere poröse iso-Graphit-Substrate (Substrate aus isostatisch gepresstem Graphit) vier verschiedener iso-Graphit-Typen werden bereitgestellt. Die Substrate des iso-Graphit-Typs 3A weisen eine Porosität von 15 % und Poren mit einem mittleren Porendurchmesser von 2,2 µm auf. Die Substrate des iso-Graphit-Typs 3B weisen eine Porosität von 14 % und Poren mit einem mittleren Porendurchmesser von 1,5 µm auf. Die Substrate des iso-Graphit-Typs 3C weisen eine Porosität von 10 % und Poren mit einem mittleren Porendurchmesser von 1,8 µm auf. Die Substrate des iso-Graphit-Typs 3D weisen eine Porosität von 10 % und Poren mit einem mittleren Porendurchmesser von weniger als 0,6 µm auf.

Die porösen Graphit-Substrate weisen eine Substratgeometrie von 5×5×1 cm³ auf.

### a) Herstellung der Suspension

Es wird eine Suspension mit folgender Zusammensetzung hergestellt:
- 66,7 Gew.% H₂O dest.
- 0,3 Gew.-% Bindemittel (z.B. Peptapon 520, pulverförmiger Feststoff, Zschimmer & Schwarz Chemie GmbH)
- 33 Gew-% Silicium-Granulat (Si-Bruch, d50 ca. 800 µm)

Zunächst werden das destillierte Wasser (H₂O dest.) und das Bindemittel eingewogen und in ein Gefäß geben. Zur Homogenisierung und Lösung des Bindemittels wird die Suspension 20 h auf Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf Rollenstand bei 30 rpm (Gefäß) ausgelagert.

### b) Beschichtungsvorgang

Die Beschichtung erfolgt mittels Sprühauftragung. Dabei erfolgt eine Zerstäubung der Suspension mittels Druckluft (4 bar). Die Suspension wird mittels Düse zugeführt (Durchmesser 2,5 mm). Die Substrate werden jeweils mit zu beschichtender Fläche (5x5 cm²) senkrecht zur Düse und damit zur Sprühstrahlrichtung gelagert, wobei das jeweilige Substrat mit 10 rpm rotiert wird. Der Abstand von Düse zu Substratoberfläche beträgt 20 cm. Die Beschichtung erfolgt mit unterschiedlichen Sprühzeiten von 4 s, 8 s, 12 s, 16 s, 20 s und 24 s. je nach aufzutragender Menge. Dabei erfolgt ein Auftrag pro 4 s von ca. 0,01 ± 0,005 g Si/cm². Nach jedem Beschichtungszyklus von 4 s werden die Proben auf einer Heizplatte an Luft bei 100 °C für 15 min zwischengetrocknet.

Auf die Substrate der vier verschiedenen iso-Graphit-Typen werden unterschiedliche Silicium-Mengen pro Flächeneinheit aufgetragen. Vom iso-Graphit-Typ 3A werden vier Substrate einer erfindungsgemäßen Behandlung unterzogen, wobei die dabei verwendeten Silicium-Mengen pro Flächeneinheit 0,008 g/cm², 0,018 g/cm², 0,033 g/cm² und 0,044 g/cm²betragen. Vom iso-Graphit-Typ 3B werden ebenfalls vier Substrate einer erfindungsgemäßen Behandlung unterzogen, wobei die dabei verwendeten Silicium-Mengen pro Flächeneinheit 0,007 g/cm², 0,022 g/cm², 0,038 g/cm² und 0,056 g/cm² betragen. Vom iso-Graphit-Typ 3C werden auch vier Substrate einer erfindungsgemäßen Behandlung unterzogen, wobei die dabei verwendeten Silicium-Mengen pro Flächeneinheit 0,011 g/cm², 0,02 g/cm², 0,03 g/cm² und 0,045 g/cm² betragen. Vom iso-Graphit-Typ 3D werden schließlich drei Substrate einer erfindungsgemäßen Behandlung unterzogen, wobei die dabei verwendeten Silicium-Mengen pro Flächeneinheit 0,02 g/cm², 0,025 g/cm² und 0,035 g/cm² betragen.

### c) Trocknungsprozess

Die beschichteten Substrate werden für 20 h bei 90 °C in Luft zum Trocknen in den Wärmeschrank ausgelagert.

### d) Infiltrationsprozess

Die getrockneten Substrate werden in graphitscher Probenkammer in einem Ofen platziert. Die beschichteten Flächen haben dabei keinen Kontakt zu den Ofeneinbauten. Es erfolgt eine Evakuierung des Ofenvolumens (10⁻³ mbar) und ein Aufheizen mit 250 K/h von Raumtemperatur auf 1500°C. Die Temperatur von 1500 °C wird für 5 h gehalten. Danach erfolgt ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme der Substrate.

Die so erhaltenen behandelten Substrate weisen alle an der jeweils behandelten Oberfläche keinerlei Rückstände von elementarem Silicium auf und zeichnen sich somit alle durch eine sehr hohe Oberflächengüte aus.

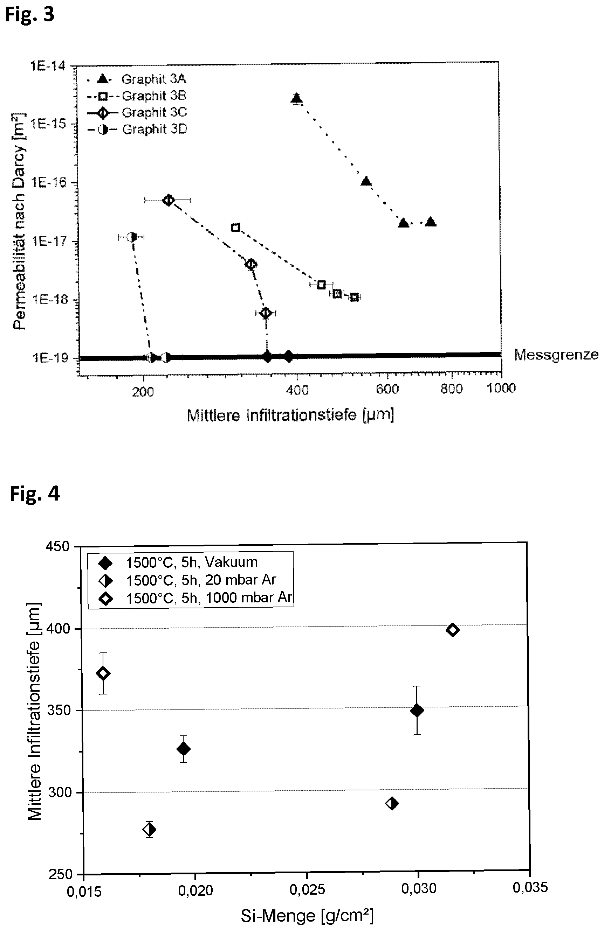

Von den behandelten Substraten wurde die Permeabilität mittels Differenzdruckverfahren (z.B. gemäß EN 993-4 : 1995) bestimmt. Im Diagramm in Fig. 3 sind die ermittelten Werte für die Permeabilität der jeweiligen behandelten Substrate graphisch dargestellt. Jedes der behandelten Substrate weist eine Permeabilität ≤ 5 · 10⁻¹⁵ m² auf. Zudem weisen die behandelten Substrate in der Infiltrationszone eine offene Porosität, bestimmt mittels Quecksilberporosimetrie, von maximal 10 % auf.

Die mittlere Infiltrationstiefe (bzw. mittlere Dicke der Infiltrationszone) wurde mittels optischer Mikroskopie an Querschliffen vertikal zur Infiltrationsrichtung bestimmt und über die gesamte Probenlänge (5 cm) gemittelt.

Das Diagramm in Fig. 3 zeigt, dass die Permeabilität des infiltrierten Substrates grundsätzlich mit der Infiltrationstiefe (bzw. der Dicke der Infiltrationszone) abnimmt. Der Abfall über die Infiltrationstiefe wird dabei mit abnehmender Ausgangspermeabilität des unbehandelten Graphitmaterials ausgeprägter. Die Permeabilität kann also über die Infiltrationstiefe des Graphitmaterials und damit über die aufgebrachte Si-Menge eingestellt werden.

### Ausführungsbeispiel 4

Es werden sechs Substrate des iso-Graphit-Typs 4A bereitgestellt. Diese weisen eine Porosität von 10 % und Poren mit einem mittleren Porendurchmesser von 1,8 µm auf.

Die porösen Graphit-Substrate weisen eine Substratgeometrie von 5×5×1 cm³ auf.

### a) Herstellung der Suspension

Es wird eine Suspension mit folgender Zusammensetzung hergestellt:
- 66,7 Gew.% H₂O dest.
- 0,3 Gew.-% Bindemittel (z.B. Peptapon 520, pulverförmiger Feststoff, Zschimmer & Schwarz Chemie GmbH)
- 33 Gew-% Silicium-Granulat (Si-Bruch, d50 ca. 800 µm)

Zunächst werden das destillierte Wasser (H₂O dest.) und das Bindemittel eingewogen und in ein Gefäß geben. Zur Homogenisierung und Lösung des Bindemittels wird die Suspension 20 h auf Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf Rollenstand bei 30 rpm (Gefäß) ausgelagert.

### b) Beschichtungsvorgang

Die Beschichtung erfolgt mittels Sprühauftragung. Dabei erfolgt eine Zerstäubung der Suspension mittels Druckluft (4 bar). Die Suspension wird mittels Düse zugeführt (Durchmesser 2,5 mm). Die Substrate werden jeweils mit zu beschichtender Fläche (5x5 cm²) senkrecht zur Düse und damit zur Sprühstrahlrichtung gelagert, wobei das jeweilige Substrat mit 10 rpm rotiert wird. Der Abstand von Düse zu Substratoberfläche beträgt 20 cm. Die Beschichtung erfolgt mit unterschiedlichen Sprühzeiten von 8 s und 12 s je nach aufzutragender Menge. Dabei erfolgt ein Auftrag pro 4 s von ca. 0,01 ± 0,005 g Si/cm². Nach jedem Beschichtungszyklus von 4 s werden die Proben auf einer Heizplatte an Luft bei 100 °C für 15 min zwischengetrocknet.

Auf die sechs Substrate des iso-Graphit-Typs 4A werden unterschiedliche Silicium-Mengen pro Flächeneinheit aufgetragen, wobei die dabei verwendete Silicium-Menge pro Flächeneinheit für drei der sechs Substrate 0,02 ± 0,005 g/cm² und für die anderen drei der sechs Substrate 0,03 ± 0,005 g/cm² beträgt.

### c) Trocknungsprozess

Die beschichteten Substrate werden für 20 h bei 90 °C in Luft zum Trocknen in den Wärmeschrank ausgelagert.

### d) Infiltrationsprozess

Die getrockneten Substrate werden unterschiedlichen Infiltrationsprozessen mit unterschiedlichen Prozessbedingungen unterzogen.

Alle getrockneten Substrate werden dabei in graphitscher Probenkammer in einem Ofen platziert, wobei die beschichteten Flächen keinen Kontakt zu den Ofeneinbauten haben. Bei allen Substraten erfolgt eine Evakuierung des Ofenvolumens (10⁻³ mbar).

Beim ersten der Substrate, die mit einer Silicium-Menge von 0,02 ± 0,005 g/cm² infiltriert wurden, und beim ersten der Substrate, die mit einer Silicium-Menge von 0,03 ± 0,005 g/cm² infiltriert wurden, wird das Vakuum über den weiteren Prozess beibehalten. Beim zweiten der Substrate, die mit einer Silicium-Menge von 0,02 ± 0,005 g/cm² infiltriert wurden, und beim zweiten der Substrate, die mit einer Silicium-Menge von 0,03 ± 0,005 g/cm² infiltriert wurden, wird stattdessen mit Argon geflutet und ein Druck 20 mbar über den weiteren Prozess beibehalten. Beim dritten der Substrate, die mit einer Silicium-Menge von 0,02 ± 0,005 g/cm² infiltriert wurden, und beim dritten der Substrate, die mit einer Silicium-Menge von 0,03 ± 0,005 g/cm² infiltriert wurden, wird schließlich mit Argon geflutet und ein Druck 1000 mbar über den weiteren Prozess beibehalten.

Anschließend erfolgt bei allen Substraten ein Aufheizen mit 250 K/h von Raumtemperatur auf 1500 °C, wobei die Temperatur von 1500 °C für 5 h gehalten wird. Danach erfolgt bei allen Substraten ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme der Substrate.

Die mittlere Infiltrationstiefe (bzw. mittlere Dicke der Infiltrationszone) wurde mittels optischer Mikroskopie an Querschliffen vertikal zur Infiltrationsrichtung bestimmt und über die gesamte Probenlänge (5 cm) gemittelt.

Die jeweils bestimmten mittleren Infiltrationstiefen der behandelten Substrate sind im Diagramm in Fig. 4 in Abhängigkeit von der aufgetragenen Silicium-Menge dargestellt.

Es wird ersichtlich, dass die Si-Infiltrationstiefe über den Prozessdruck eingestellt werden kann. Wird der Infiltrationsprozess im Vakuum gefahren, kann eine Infiltrationstiefe zwischen 325 und 350 µm für eine Si-Menge von 0,02 ± 0,005 g/cm² bis 0,03 ± 0,005 g/cm² eingestellt werden. Wird für den Infiltrationsprozess ein Argon-Druck von 20 mbar eingestellt, kann eine Abnahme der Infiltrationstiefe auf 275 µm bzw. 290 µm beobachtet werden. Wird der Prozessdruck weiter auf 1000 mbar erhöht, kann dabei eine deutliche Zunahme der Infiltrationstiefe auf 375 µm bzw. 400 µm erreicht werden.

Mit der Variation des Prozessdruckes kann folglich die Tiefe der Infiltrationszone beeinflusst und eingestellt werden.

### Ausführungsbeispiel 5

Es werden zwei Substrate des iso-Graphit-Typs 5A bereitgestellt. Dieses weist Poren mit einem mittleren Porendurchmesser von 1,8 µm auf.

Eines der zwei Substrate wird für die Bestimmung der Permeabilität nach der Infiltration verwendet und weist eine Substratgeometrie von 5×5×1 cm³ auf. Das andere der zwei Substrate wird für die Bestimmung der offenen Porosität in der Infiltrationszone nach der Infiltration verwendet und weist eine Substratgeometrie von 2x0,5x0,5 cm³ auf

### a) Herstellung der Suspension

Es wird eine Suspension mit folgender Zusammensetzung hergestellt:
- 66,7 Gew.% H₂O dest.
- 0,3 Gew.-% Bindemittel (z.B. Peptapon 520, pulverförmiger Feststoff, Zschimmer & Schwarz Chemie GmbH)
- 33 Gew-% Silicium-Granulat (Si-Bruch, d50 ca. 800 µm)

Zunächst werden das destillierte Wasser (H₂O dest.) und das Bindemittel eingewogen und in ein Gefäß geben. Zur Homogenisierung und Lösung des Bindemittels wird die Suspension 20 h auf Rollenstand bei 30 rpm (Gefäß) ausgelagert. Anschließend wird das Silicium-Granulat abgewogen und der Suspension hinzugefügt. Zur Homogenisierung der Suspension mit Feststoffanteil wird diese 15 min auf Rollenstand bei 30 rpm (Gefäß) ausgelagert.

### b) Beschichtungsvorgang

Die zwei Substrate werden unterschiedlichen Beschichtungsvorgängen unterzogen.

### Substrat für die Bestimmung der Permeabilität:

Die Beschichtung erfolgt mittels Sprühauftragung. Dabei erfolgt eine Zerstäubung der Suspension mittels Druckluft (4 bar). Die Suspension wird mittels Düse zugeführt (Durchmesser 2,5 mm). Die Substrate werden jeweils mit zu beschichtender Fläche (5x5 cm²) senkrecht zur Düse und damit zur Sprühstrahlrichtung gelagert, wobei das jeweilige Substrat mit 10 rpm rotiert wird. Der Abstand von Düse zu Substratoberfläche beträgt 20 cm. Die Beschichtung erfolgt mit einer Sprühzeit von 20 s je nach aufzutragender Menge. Dabei erfolgt ein Auftrag pro 4 s von ca. 0,01 ± 0,005 g Si/cm². Nach jedem Beschichtungszyklus von 4 s werden die Proben auf einer Heizplatte an Luft bei 100 °C für 15 min zwischengetrocknet. Die verwendete Silicium-Menge pro Flächeneinheit beträgt insgesamt 0,05 ± 0,005 g/cm².

### Substrat für die Bestimmung der offenen Porosität:

Die Beschichtung erfolgt auf allen Flächen des Substrats. Aufgrund der kleinen Probenabmessungen konnte die Beschichtung nicht über Sprühverfahren erfolgen. Für jede Fläche der Graphitprobe erfolgt die Einwaage der benötigten Suspensionsmenge, um 0,05 ± 0,005 gSi/cm² zu erreichen. Die abgewogene Suspensionsmenge wird auf die entsprechende Fläche aufgetragen und händisch mit einem Spatel gleichmäßig verteilt. Es erfolgt eine Zwischentrocknung auf einer Heizplatte an Luft bei 100 °C für 15 min. Danach erfolgt eine Wiederholung des Prozesses, bis alle Flächen der Proben mit Si-Beschichtung versehen sind.

### c) Trocknungsprozess

Die beschichteten Substrate werden für 20 h bei 90 °C in Luft zum Trocknen in den Wärmeschrank ausgelagert.

### d) Infiltrationsprozess

Die getrockneten Substrate werden in graphitscher Probenkammer in einem Ofen platziert. Die beschichteten Flächen haben dabei keinen Kontakt zu den Ofeneinbauten. Es erfolgt eine Evakuierung des Ofenvolumens (10⁻³ mbar) und ein Aufheizen mit 250 K/h von Raumtemperatur auf 1500°C. Die Temperatur von 1500 °C wird für 5 h gehalten. Danach erfolgt ein Abkühlen von 1500 °C auf Raumtemperatur mit 200 K/h (Abkühlrate nimmt ab 700 °C auf bis zu 50 K/min ab, da keine aktive Kühlung vorhanden ist.) Nach Abkühlung erfolgt ein Fluten des Ofenvolumens mit Argon bis zu Atmosphärendruck und Entnahme der Substrate.

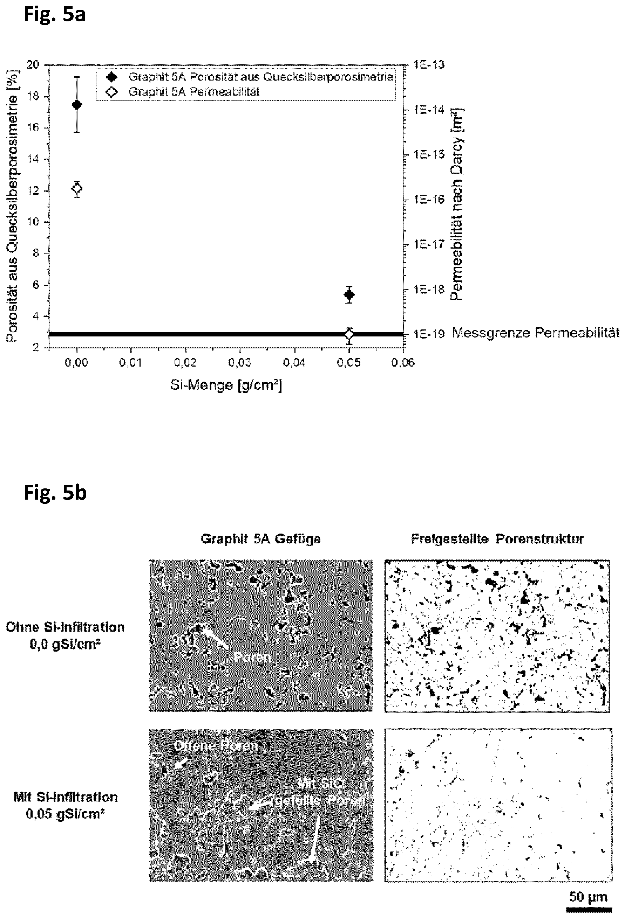

Vom unbehandelten Substrat sowie vom behandelten Substrat wurde jeweils sowohl die Permeabilität mittels Differenzdruckverfahren (z.B. gemäß EN 993-4 : 1995) als auch die offene Porosität mittels Quecksilberporosimetrie (z.B. gemäß DIN 66133:1993-06) bestimmt. Im Diagramm in Fig. 5a sind die ermittelten Werte für die Permeabilität und die offene Porisität graphisch dargestellt.

Die Quecksilberporositätsmessungen an den Substraten des iso-Grapit-Typs 5A zeigen, dass mit der Infiltration von Si eine deutliche Reduktion der Porosität von ca. 17,5 % im Ausgangszustand auf ca. 6 % erreicht werden. Die Infiltration der Si-Schmelze führt zur weitestgehenden Ausfüllung der Porenstrukturen im Graphitmaterial. Die in Fig. 5b gezeigten Aufnahmen der Gefügestruktur ohne und mit Si-Infiltration zeigen deutlich, dass nach Infiltration nur noch sehr kleine Porenstrukturen nicht verschlossen vorliegen. Somit kann analog zur Porosität ebenfalls die Gaspermeabilität des Substrates bis hin zur Messgrenze der Permeabilität (1 · 10⁻¹⁹ m²) reduziert werden.

## Patentansprüche

1. Verfahren zur Behandlung von porösen Substraten, bei welchem
a) mindestens eine Oberfläche eines porösen kohlenstoffhaltigen Substrats mit mindestens einer Silicium-Beschichtung versehen wird, indem mindestens eine wässrige Suspension umfassend Silicium-Partikel, mindestens ein Bindemittel und Wasser auf die mindestens eine Oberfläche aufgebracht und danach einem Trocknungsprozess unterzogen wird, und
b) die mindestens eine Silicium-Beschichtung mindestens einer Wärmebehandlung unterzogen wird, bei welcher die Silicium-Beschichtung zu einer Schmelze aufschmilzt, die in Poren des porösen kohlenstoffhaltigen Substrats infiltriert, wobei in der Schmelze enthaltendes Silicium zumindest teilweise in Siliciumcarbid umgewandelt wird.

2. Verfahren nach dem vorhergehenden Anspruch, **dadurch gekennzeichnet, dass** die Silicium-Partikel eine mittlere Partikelgröße im Bereich von 10 µm bis 3500 µm, bevorzugt von 310 µm bis 1700 µm, besonders bevorzugt von 500 bis 1000 µm, aufweisen.

3. Verfahren nach einem der vorhergehenden Ansprüche, **dadurch gekennzeichnet, dass** das mindestens eine Bindemittel
- eine Haftfestigkeit der Silicium-Beschichtung von mindestens 0,15 MPa gewährleistet, und/oder
- ausgewählt ist aus der Gruppe bestehend aus Polyvinylalkohol, Polyethylenglycol, Polyvinylbutyral, Polyacrylsäure, Polyurethan, Chloropren-Kautschuk, Phenolharz, Acrylharz, Cellulose, Cellulose-Derivaten, Alginsäure, Dextrin, und Mischungen hiervon.

4. Verfahren nach einem der vorhergehenden Ansprüche, **dadurch gekennzeichnet, dass** die mindestens eine wässrige Suspension
- 1 bis 50 Gew.-%, bevorzugt 5 bis 35 Gew.-%, der Silicium-Partikel, bezogen auf das Gesamtgewicht der mindestens einen wässrigen Suspension, enthält, und/oder
- 0,01 bis 3 Gew.-%, bevorzugt 0,05 bis 0,3 Gew.-%, des mindestens einen Bindemittels, bezogen auf das Gesamtgewicht der mindestens einen wässrigen Suspension, enthält.

5. Verfahren nach einem der vorhergehenden Ansprüche, **dadurch gekennzeichnet, dass** das Aufbringen der mindestens einen wässrigen Suspension in Schritt a) mittels Tauchen, Pinseln, Rakeln und/oder Sprühauftragung, vorzugsweise mittels Sprühauftragung, erfolgt.

6. Verfahren nach einem der vorhergehenden Ansprüche, **dadurch gekennzeichnet, dass** der Trocknungsprozess bei einer Temperatur im Bereich von 10 °C bis 200 °C, bevorzugt von 80 °C bis 100 °C, und/oder über eine Dauer von 5 h bis 48 h, bevorzugt von 10 h bis 12 h, erfolgt.

7. Verfahren nach einem der vorhergehenden Ansprüche, **dadurch gekennzeichnet, dass** die mindestens eine Wärmebehandlung
- bei einer Temperatur im Bereich von 1400 °C bis 1800 °C, bevorzugt von 1450 °C bis 1550 °C, erfolgt, und/oder
- über eine Dauer von 1 h bis 10 h, bevorzugt von 4 h bis 6 h, erfolgt, und/oder
- unter Vakuum oder unter Inertgasatmosphäre, bevorzugt Argon-Atmosphäre, bei einem (Prozess-)Druck von 10 mbar bis 2000 mbar, bevorzugt von 100 mbar bis 1800 mbar, besonders bevorzugt von 500 mbar bis 1500 mbar, ganz besonders bevorzugt von 800 mbar bis 1200 mbar,
erfolgt.

8. Verfahren nach einem der vorhergehenden Ansprüche, **dadurch gekennzeichnet, dass**
- das poröse kohlenstoffhaltige Substrat ein Material enthält oder daraus besteht, welches ausgewählt ist aus der Gruppe bestehend aus Graphit, vorzugsweise iso-Graphit; Kohlenstoff-Faser verstärktem Kohlenstoff; Siliciumcarbid-Faser verstärktem Kohlenstoff; Siliciumcarbid-Faser verstärktem Siliciumcarbid; Glaskohlenstoff; gesintertem Siliciumcarbid; Silicium infiltriertem Siliciumcarbid; und Kombinationen hiervon, und/oder
- das poröse kohlenstoffhaltige Substrat ein Material enthält oder daraus besteht, welches einen thermischen Ausdehnungskoeffizienten von mindestens 2,8 · 10⁻⁶ K⁻¹, bevorzugt von mindestens 3,0 · 10⁻⁶ K⁻¹, besonders bevorzugt von mindestens 3,2 · 10⁻⁶ K⁻¹, aufweist, und/oder
- das poröse kohlenstoffhaltige Substrat eine offene Porosität, gemessen mittels Quecksilberporosimetrie, von mindestens 12 %, bevorzugt von 12 % bis 30 %, besonders bevorzugt von 14 % bis 25 %, ganz besonders bevorzugt von 15 % bis 20 %, aufweist, und/oder
- die Poren des porösen kohlenstoffhaltigen Substrats einen mittleren Porendurchmesser im Bereich von 0,1 µm bis 10 µm, bevorzugt von 1 µm bis 5 µm, besonders bevorzugt von 1,5 µm bis 5 µm, aufweist.

9. Verfahren nach einem der vorhergehenden Ansprüche, **dadurch gekennzeichnet, dass** die Infiltrationstiefe der Schmelze durch die Menge pro Flächeneinheit der auf der mindestens einen Oberfläche aufgetragenen mindestens einen wässrigen Suspension und/oder durch den Druck während der mindestens einen Wärmebehandlung eingestellt wird.

10. Behandeltes Substrat umfassend ein kohlenstoffhaltiges Substratmaterial mit Poren, wobei das Substrat an mindestens einer Oberfläche eine Infiltrationszone aufweist, in der die Poren des Substratmaterials zumindest teilweise mit Siliciumcarbid gefüllt sind, wobei das behandelte Substrat eine Permeabilität von maximal 5 · 10⁻¹⁵ m² aufweist und wobei das behandelte Substrat in der Infiltrationszone eine offene Porosität, bestimmt mittels Quecksilberporosimetrie, von maximal 10 % aufweist.

11. Behandeltes Substrat nach Anspruch 10, **dadurch gekennzeichnet, dass** das behandelte Substrat
- eine Permeabilität von maximal 1 · 10⁻¹⁶ m², bevorzugt von maximal 1 · 10⁻¹⁷ m², besonders bevorzugt von maximal 1 · 10⁻¹⁹ m², aufweist, und/oder
- eine Permeabilität aufweist, die um einen Faktor von mindestens 10, bevorzugt von mindestens 100, geringer ist als eine Permeabilität des Substrats vor der Behandlung, und/oder
- in der Infiltrationszone eine offene Porosität, bestimmt mittels Quecksilberporosimetrie, von maximal 8 %, bevorzugt maximal 5 %, aufweist, und/oder
- in der Infiltrationszone eine offene Porosität, bestimmt mittels Quecksilberporosimetrie aufweist, die um mindestens 7 %, bevorzugt um mindestens 10 %, besonders bevorzugt um mindestens 12 %, bezogen auf das Gesamtvolumen des behandelten Substrats, geringer ist als eine offene Porosität des behandelten Substrats außerhalb der Infiltrationszone, und/oder
- einen spezifischen Widerstand von maximal 1500 mΩcm, bevorzugt von maximal 10 mΩcm, aufweist, und/oder
- kein elementares Silicium aufweist.

12. Behandeltes Substrat nach Anspruch 10 oder 11, **dadurch gekennzeichnet, dass**
- die Infiltrationszone eine mittlere Dicke von mindestens 100 µm, bevorzugt von 100 µm bis 1200 µm, besonders bevorzugt von 200 µm bis 800 µm, aufweist, und/oder
- das Siliciumcarbid, mit dem die Poren des Substratmaterials in der Infiltrationszone zumindest teilweise gefüllt sind, 3C-SiC enthält, vorzugsweise 3C-SiC als Hauptphase aufweist.

13. Behandeltes Substrat nach einem der Ansprüche 10 bis 12, **dadurch gekennzeichnet, dass** das kohlenstoffhaltige Material ausgewählt ist aus der Gruppe bestehend aus Graphit, vorzugsweise iso-Graphit; Kohlenstoff-Faser verstärktem Kohlenstoff; Siliciumcarbid-Faser verstärktem Kohlenstoff; Siliciumcarbid-Faser verstärktem Siliciumcarbid; gesintertem Siliciumcarbid; Glaskohlenstoff; und Kombinationen hiervon.

14. Behandeltes Substrat nach einem der Ansprüche 10 bis 13, **dadurch gekennzeichnet, dass** es mit einem Verfahren gemäß einem der Ansprüche 1 bis 9 herstellbar oder hergestellt ist.

15. Verwendung eines behandelten Substrats gemäß einem der Ansprüche 10 bis 14 als Komponente für Hochtemperaturöfen, bevorzugt Heizer, Isolationskomponente, Halterung; als Tiegel oder Tiegelelement.
